# EUROPÄISCHE PATENTSCHRIFT

(11) **EP 1 283 105 B1**
(45) Veröffentlichungstag und Bekanntmachung des Hinweises auf die Patenterteilung: **17.11.2004**
(21) Anmeldenummer: 02017660.8
(22) Anmeldetag: 06.08.2002
(51) Int. Cl.: B32B 17/10

(54) **Frontblende eines Elektrogerätes**
Front panel for an electric device
Panneau frontal pour un appareil électrique

(30) Priorität: 08.08.2001 DE 10138978; 05.09.2001 DE 10143485
(43) Veröffentlichungstag der Anmeldung: 12.02.2003
(73) Patentinhaber: BSH Bosch und Siemens Hausgeräte GmbH, 81739 München (DE)
(72) Erfinder: Fleissner, Reinhard, 83352 Altenmarkt (DE); Meierhofer, Rudolf, 83352 Altenmarkt (DE)

(56) Entgegenhaltungen:
- EP-A- 0 826 489
- EP-A- 0 974 714
- EP-A- 1 167 073
- GB-A- 2 323 333
- US-A- 4 716 672

## Beschreibung

Die vorliegende Erfindung betrifft eine Frontblende in einer Gerätefront eines Elektrogerätes wie bspw. eines elektrischen Kochherdes.

Gerätefronten von Elektrogeräten wie Kochherden oder dergl. sind aus Gründen der besseren Erkennbarkeit von Schaltstellungen, der besseren Ablesbarkeit von Bedieneinrichtungen und/oder aus ästhetischen Gründen oftmals mit gemusterten, getönten und/ oder teildurchsichtigen oder anderweitig strukturierten Oberflächen bzw. Feldern versehen. Diese Felder können beispielsweise aus Kunststoff hergestellt sein.

Eine Kunststoffoberfläche, die zu dekorativen Zwecken vorgesehen ist, ist bspw. aus der europäischen Patentschrift EP 085 784 B1 bekannt. Diese weist eine Licht abschirmende, harzhaltige Grundplatte, ein über die Grundplatte verteiltes Muster sowie eine darüber verteilte transparente Überzugsschicht aus Kunstharz auf. Das Muster ist aus einer Licht abschirmenden Tinte gebildet, die auf die Oberfläche der Zwischenschicht aufgebracht ist. Als Licht abschirmende Schicht sind bspw. Tinte mit Pigmenten aus Titanoxid, Kunstharz mit Pigmenten mit Perlglanz oder dergl. beschrieben. Ein Verfahren zur Herstellung einer Kunststoffoberfläche für Dekorzwecke ist weiterhin aus der US 298 71 02 bekannt.

Der vorliegenden Erfindung liegt die Aufgabe zugrunde, eine Frontblende einer Gerätefront mit einem Fensterausschnitt zur Verfügung zu stellen, die eine optische Tiefenwirkung aufweist.

Diese Aufgabe wird mit dem Gegenstand des unabhängigen Anspruchs gelöst. Merkmale vorteilhafter Weiterbildungen der Erfindung ergeben sich aus den abhängigen Ansprüchen.

Erfindungsgemäß weist eine Frontblende eines Elektrogerätes, insbesondere eines elektrischen Haushaltsgerätes wie beispielsweise eines Kochherdes oder dergleichen, wenigstens drei hintereinander angeordnete Schichten auf. Eine erste Schicht bildet gleichzeitig einen Abschnitt einer Gerätefront und besteht aus einem glattflächigen, lichtundurchlässigen Material. Rückseitig schließt sich mit einer ersten Seite an diese erste Schicht eine zweite Schicht an, die aus transparentem Material besteht. Es ist weiterhin eine dritte Schicht aus lichtundurchlässigem Material vorgesehen, welche die zweite Schicht an einer der Gerätefront abgewandten zweiten Seite zumindest teilweise bedeckt. Die erste Schicht weist einen Fensterausschnitt auf, der bei Draufsicht auf die Frontblende einen Teil der zweiten Schicht sichtbar lässt. Erfindungsgemäß ist zudem vorgesehen, dass die dritte Schicht in einem ersten Bereich, welcher annähernd dem ersten Fensterausschnitt entspricht, eine Farbe aufweist, und dass die dritte Schicht in einem den ersten Bereich umgebenden zweiten Bereich eine vom ersten Bereich verschiedene Farbe aufweist. Optimal ist der 3-D-Eindruck dann, wenn Farben und/oder Strukturen der Oberflächen der ersten und dritten Schicht gleich sind.

Diese Gestaltung der Frontblende erzeugt eine optische Tiefenwirkung in Gestalt eines sog. Vitrineneffekts, die bei einer Betrachtung eine räumliche Wirkung hinterlässt. Auf diese Weise können optisch sehr ansprechende Frontblenden dargestellt werden, die bei Betrachtung unter unterschiedlichen Blickwinkeln jeweils unterschiedliche optische Eindrücke hinterlässt. Die in Struktur und Farbe der Oberfläche der ersten Schicht der Frontblende angepasste dritte Schicht, welche durch die transparente zweite Schicht hindurch sichtbar ist, erzeugt einen optisch homogenen Eindruck, dessen dreidimensionale Wirkung durch die unterschiedliche Farbe des zweiten Bereiches erzeugt wird.

Gemäß einer Ausführungsform der Erfindung sind der erste Fensterausschnitt der ersten Schicht und der erste Bereich der dritten Schicht deckungsgleich zueinander angeordnet, wodurch die optische Tiefenwirkung optimal zur Geltung kommt.

Eine bevorzugte Ausführungsform sieht vor, dass der erste Fensterausschnitt der ersten Schicht minimal größere Abmessungen aufweist als der erste Bereich der dritten Schicht. Dadurch ist unter jedem Blickwinkel zumindest ein Teil des Randes des zweiten Bereiches der dritten Schicht durch den ersten Fensterausschnitt sichtbar, was aufgrund der vom ersten Bereich verschiedenen Farbe den gewünschten optischen Effekt verbessert. Um den gewünschten Effekt zu erzielen, kann der Fensterausschnitt der ersten Schicht in seiner Länge und Breite jeweils bspw. zwischen 0,1 und 1 mm größer sein als der erste Bereich der dritten Schicht.

Erfindungsgemäß ist bei einer weiteren Ausführungsform vorgesehen, dass die dritte Schicht im ersten Bereich einen Fensterausschnitt aufweist, der eine Durchsicht ermöglicht. Dieser Fensterausschnitt kann bspw. eine Durchsicht auf optische Anzeigen wie bspw. Leuchtziffern, Ziffernanzeigen oder Digitaldisplays oder dergl. ermöglichen. Die Frontblende, der erste Fensterausschnitt und der zweite Fensterausschnitt können vorzugsweise jeweils rechteckförmig sein, wobei die Ecken jeweils abgerundet sind. Diese Rechtecke können zudem in einer bevorzugten Ausführungsform jeweils deckungsgleiche Symmetrieachsen aufweisen, wodurch ein optisch sehr homogener Eindruck erzielt werden kann.

Die erste Schicht kann bspw. aus einem Kunststoff bestehen, der in Struktur und Farbe einem gebürsteten oder gestrahlten Metallblech ähnelt. Gemäß einer bevorzugten Ausführungsform der Erfindung kommt als Material jedoch Metallblech in Frage. Dieses kann gebürstet oder gestrahlt sein, was eine seidenmatte Oberfläche ergibt. Sowohl Aluminium als auch Edelstahl eignet sich als Material für die erste Schicht. Als Material für die transparente zweite Schicht eignet sich Mineral- oder Kunststoffglas. Die zweite Schicht kann in vorteilhafter Weise mit der ersten Schicht verklebt sein. Die dritte Schicht, welche in Farbe und Oberflächenstruktur der Oberfläche der ersten Schicht gleicht, ist vorzugsweise als Bedruckung der zweiten Seite der zweiten Schicht ausgeführt. Die dritte Schicht kann aus einem Lack bestehen, der entweder aufgedruckt oder aufgespritzt ist.

Gemäß einer weiteren Ausführungsform der Erfindung ist der zweite Bereich der dritten Schicht in einer Kontrastfarbe ausgeführt, was den optischen Tiefeneffekt verstärkt.

Mit dem beschriebenen Aufbau der Frontblende kann eine Vitrinenlösung für Anzeigefunktionen bei Gerätefronten wie bspw. Herdschalterfronten mit Glas/Aluminiumkombination mit optischer Tiefenwirkung erreicht werden. Dabei ist eine von hinten bedruckte Glasscheibe mit einer gestrahlten oder eloxierten Aluminiumfront verklebt. Die optische Tiefenwirkung der Glasscheibe wird unter anderem durch eine zweifarbige Bedruckung der Glasscheibe erreicht, welche im Fensterbereich möglichst weitgehend der Oberflächenfarbe und -struktur der Alufront entspricht. Die ergänzende Farbe kann frei gewählt werden, sollte aber einen Kontrast zwischen den beiden Farben erzeugen. Die Größe des Fensters der Aluminiumfront sollte umlaufend minimal größer, nicht jedoch kleiner als der durch die Bedruckung dargestellte Fensterbereich sein.

Weitere Vorteile und bevorzugte Ausführungsformen können der Figurenbeschreibung entnommen werden.

Die Erfindung wird nachfolgend anhand der zugehörigen Zeichnung erläutert. Es zeigen:
- Figur 1: eine perspektivische Prinzipdarstellung einer erfindungsgemäßen Frontblende und
- Figur 2: eine Querschnittdarstellung entlang der Linie I-I der Figur 1.

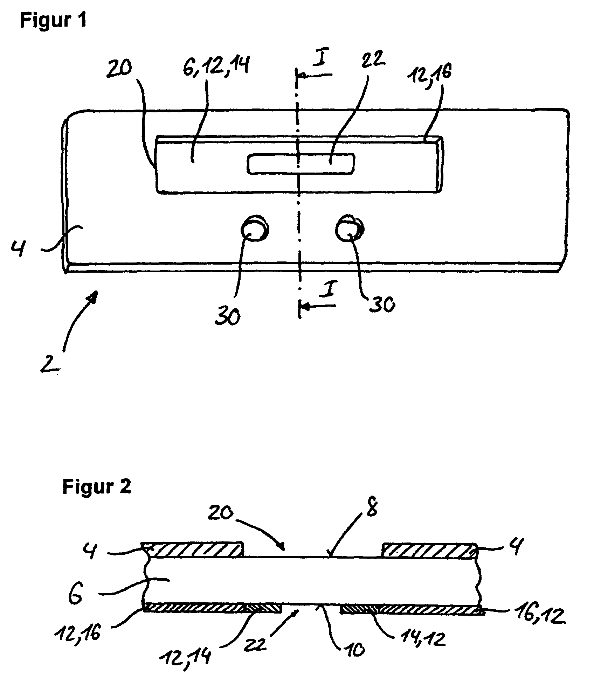

Figur 1 zeigt eine Frontblende 2, die beispielsweise ein Teil einer Gerätefront eines Kochherdes sein kann. Die Frontblende 2 weist eine erste Schicht 4 aus Aluminium- oder Edelstahlblech auf, die mit einem ersten Fensterausschnitt 20 sowie mit zwei Durchführungen 30 versehen ist. Der Fensterausschnitt 20 weist eine rechteckförmige Kontur mit abgerundeten Ecken auf. Die erste Schicht 4 kann eine typische Dicke von 0,5 bis zu 2 mm aufweisen. Durch die Durchführungen 30 können Drehachsen von Drehschaltern oder dergl. geführt sein. Die erste Schicht 4 ist rückseitig, d.h. an ihrer der Frontseite abgewandten Rückseite mit einer transparenten zweiten Schicht 6 verklebt, die vorzugsweise aus Mineral- oder Kunststoffglas besteht.

Die erste Seite 8 der zweiten Schicht 6 ist mit der ersten Schicht 4 verklebt. Die zweite Seite 10 der zweiten Schicht 6 ist unter Aussparung eines zweiten Fensterausschnittes 22 von einer dritten Schicht 12 bedeckt, die bspw. als Bedruckung mit einem lichtundurchlässigen Lack ausgeführt sein kann.

Der zweite Fensterausschnitt 22 lässt einen transparenten Bereich in der dritten Schicht 12 frei und ist deutlich kleiner als der erste Fensterausschnitt 20 der Aluminium- oder Edelstahlfront. Auch der zweite Fensterausschnitt 22 weist eine rechteckförmige Kontur auf und ist mit abgerundeten Kanten versehen. Vorzugsweise sind die Symmetrieachsen des ersten 20 und des zweiten Fensterausschnittes 22 deckungsgleich zueinander. Der zweite Fensterausschnitt 22 ist vorgesehen zur Durchsicht auf Anzeigeleuchten oder - displays oder dergleichen.

Die dritte Schicht 12 ist in einem ersten Bereich 14, der durch den ersten Fensterausschnitt 20 sichtbar ist, in Struktur und Farbe weitgehend der ersten Schicht 4 angenähert. Dieser erste Bereich 14 entspricht von seinen Umrissen her den Abmessungen des ersten Fensterausschnittes 20 und kann ggf. minimal kleiner sein als dieser. Die dritte Schicht 12 besteht in einem den ersten Bereich 14 umgebenden zweiten Bereich 16 aus einer nicht transparenten Bedruckung mit einer anderen Farbe als der erste Bereich 14, vorzugsweise mit einer Kontrastfarbe.

Anhand der Querschnittdarstellung entlang der Linie I-I der Figur 2 wird der schichtweise Aufbau der drei Schichten 4, 6, 12 nochmals in ihren Einzelheiten verdeutlicht. Gleiche Teile wie in der Figur 1 sind mit gleichen Bezugszeichen versehen und sind daher teilweise nicht nochmals erläutert. An die erste Schicht 4 mit ihrem ersten Fensterausschnitt 20 schließt sich die zweite Schicht 6 aus transparentem Material an. Diese ist rückseitig, d.h. an ihrer der ersten Schicht 4 abgewandten zweiten Seite 10 mit einer dritten Schicht 12 aus nicht transparentem Lack oder dergl. versehen. Die dritte Schicht 12 besteht aus zwei Bereichen. Der erste Bereich 14 ist durch den ersten Fensterausschnitt 20 sichtbar und weist annähernd die gleiche Farbe auf wie die Frontseite der ersten Schicht 4. Der zweite Bereich 16 stellt eine Bedruckung in einer Kontrastfarbe dar und umschließt den ersten Bereich 14. Die Bedruckung des ersten Bereichs 14 kann bspw. in Mattsilber und die des zweiten Bereichs 16 in Dunkelblau oder Dunkelrot ausgeführt sein. Die sichtbare Fläche des ersten Bereichs 14 ist vorzugsweise minimal kleiner als der erste Fensterausschnitt 20, so dass aus jedem Blickwinkel ein Teil der Bedruckung des zweiten Bereichs 16 sichtbar ist. Die Dicke der ersten Schicht 4 beträgt vorzugsweise zwischen 0,5 und 2 mm. Die Dicke der zweiten transparenten Schicht 6 beträgt vorzugsweise zwischen 3 und 15 mm. Die Dicke der Bedruckung der dritten Schicht 12 beträgt typischerweise weniger als 0,5 mm.

Für den Fachmann ist erkennbar, dass die Erfindung nicht auf das dargestellte Ausführungsbeispiel beschränkt ist, sondern dass eine Vielzahl von Varianten und Abwandlungen ebenfalls davon umfasst sind.

## Patentansprüche

1. Frontblende eines Elektrogerätes, insbesondere eines elektrischen Haushaltsgerätes wie bspw. eines Kochherdes, die wenigstens drei hintereinander angeordnete Schichten (4, 6, 12) aufweist, mit einer einen Teil einer Gerätefront bildenden ersten Schicht (4) aus einem glattflächigen, lichtundurchlässigen Material, mit einer sich mit einer ersten Seite (8) an die erste Schicht (4) anschließenden zweiten Schicht (6) aus transparentem Material und mit einer die zweite Schicht (6) an einer der Gerätefront abgewandten zweiten Seite (10) zumindest teilweise bedeckenden dritten Schicht (12) aus lichtundurchlässigem Material, wobei die erste Schicht (4) einen ersten Fensterausschnitt (20) aufweist, der einen Teil der zweiten Schicht (6) sichtbar lässt, wobei die dritte Schicht (12) in einem ersten Bereich (14), welcher annähernd dem ersten Fensterausschnitt (20) entspricht, eine Farbe aufweist und in einem den ersten Bereich (14) umgebenden zweiten Bereich (16) eine vom ersten Bereich (14) verschiedene Farbe aufweist.

2. Frontblende nach Anspruch 1, **dadurch gekennzeichnet**, der erste Fensterausschnitt (20) der ersten Schicht (4) und der erste Bereich (14) der dritten Schicht (12) deckungsgleich zueinander angeordnet sind.

3. Frontblende nach Anspruch 1 oder 2, **dadurch gekennzeichnet, dass** der erste Fensterausschnitt (20) der ersten Schicht (4) minimal größere Abmessungen aufweist als der erste Bereich (14) der dritten Schicht (12).

4. Frontblende nach einem der vorstehenden Ansprüche, **dadurch gekennzeichnet, dass** die dritte Schicht (12) im ersten Bereich (14) einen zweiten Fensterausschnitt (22) aufweist, der eine Durchsicht ermöglicht.

5. Frontblende nach einem der vorstehenden Ansprüche, **dadurch gekennzeichnet, dass** die Frontblende (2), der erste Fensterausschnitt (20) und der zweite Fensterausschnitt (22) jeweils rechteckförmig sind.

6. Frontblende nach einem der vorstehenden Ansprüche, **dadurch gekennzeichnet, dass** die erste Schicht (4) aus Metallblech besteht.

7. Frontblende nach einem der vorstehenden Ansprüche, **dadurch gekennzeichnet, dass** die erste Schicht (4) aus Aluminiumblech besteht.

8. Frontblende nach einem der vorstehenden Ansprüche, **dadurch gekennzeichnet, dass** die zweite Schicht (6) aus Glas besteht.

9. Frontblende nach einem der vorstehenden Ansprüche, **dadurch gekennzeichnet, dass** die dritte Schicht (12) aus Kunststoff besteht.

10. Frontblende nach einem der vorstehenden Ansprüche, **dadurch gekennzeichnet, dass** der zweite Bereich (16) der dritten Schicht (12) eine Kontrastfarbe zum ersten Bereich (14) aufweist.

11. Frontblende nach einem der vorstehenden Ansprüche, **dadurch gekennzeichnet, dass** die zweite Schicht (4) mit ihrer ersten Seite (8) auf eine Rückseite der ersten Schicht (4) geklebt ist.

12. Frontblende nach einem der vorstehenden Ansprüche, **dadurch gekennzeichnet, dass** der zweite Fensterausschnitt (22) zur Durchsicht auf dahinter befindliche optische Anzeigen geeignet ist.

13. Frontblende nach einem der vorstehenden Ansprüche, **dadurch gekennzeichnet, dass** die dritte Schicht (12) in dem ersten Bereich (14) in der Farbe und/oder in der Struktur der Oberfläche der ersten Schicht (4) gleicht.

14. Haushaltsgerät, insbesondere Backofen mit einer Frontblende nach einem der vorhergehenden Ansprüche.

## Claims

1. Front panel of an electric appliance, particularly electric domestic appliance such as, for example, a cooking oven, which comprises three layers (4, 6, 12) arranged one behind the other, with a first layer (4), which forms a part of an appliance front, of a smooth-surfaced, light-impermeable material, with a second layer (6), which by a first side (8) adjoins the first layer (4), of transparent material and with a third layer (12), which at least partly covers the second layer (6) at a second side (10) remote of the appliance front, of light-impermeable material, wherein the first layer (4) has a first window cut-out (20), which leaves visible a part of the second layer (6), wherein the third layer (12) has a colour in a first region (14) approximately corresponding with the first window cut-out (20) and a colour, which is different from the first region (14), in a second region (16) surrounding the first region (14).

2. Front panel according to claim 1, **characterised in that** the first window cut-out (20) of the first layer (4) and the first region (14) of the third layer (12) are arranged to be congruent with one another.

3. Front panel according to claim 1 or 2, **characterised in that** the first window cut-out (20) of the first layer (4) has minimally larger dimensions than the first region (14) of the third layer (12).

4. Front panel according to one of the preceding claims, **characterised in that** the third layer (12) has in the first region (14) a second window cut-out (22) which makes it possible to look through.

5. Front panel according to one of the preceding claims, **characterised in that** the front panel (2), the first window cut-out (20) and the second window cut-out (22) are each rectangular.

6. Front panel according to one of the preceding claims, **characterised in that** the first layer (4) consists of sheet metal.

7. Front panel according to one of the preceding claims, **characterised in that** the first layer (4) consists of sheet aluminium.

8. Front panel according to one of the preceding claims, **characterised in that** the second layer (6) consists of glass.

9. Front panel according to one of the preceding claims, **characterised in that** the third layer (12) consists of plastics material.

10. Front panel according to one of the preceding claims, **characterised in that** the second region (16) of the third layer (12) has a colour contrast relative to the first region (14).

11. Front panel according to one of the preceding claims, **characterised in that** the second layer (4) is glued by the first side (8) thereof to a rear side of the first layer (4).

12. Front panel according to one of the preceding claims, **characterised in that** the second window cut-out (22) is suitable for looking through onto optical indicators disposed therebehind.

13. Front panel according to one of the preceding claims, **characterised in that** the third layer (12) in the first region (14) is the same in colour and/or in structure to the surface of the first layer (4).

14. Domestic appliance, particularly baking oven, with a front panel according to one of the preceding claims.

## Revendications

1. Panneau frontal d'un appareil électrique, notamment d'un appareil électroménager comme par exemple d'une cuisinière, qui est muni d'au moins trois couches (4, 6,12) disposées les unes derrière les autres, avec une première couche (4) en matériau opaque à surface lisse formant une partie du front de l'appareil, avec une seconde couche (6) en matériau transparent se raccordant sur la première couche (4) par une première face (8) et avec une troisième couche (12) en matériau opaque recouvrant au moins partiellement la seconde couche (6) sur une seconde face (10) opposée au front de l'appareil, la première couche (4) étant munie d'une première découpe de fenêtre (20) qui laisse apparaître une partie de la seconde couche (6), la troisième couche (12) ayant dans une première zone (14) qui correspond approximativement à la première découpe de fenêtre (20), une couleur et une couleur différente de la première zone (14) dans une seconde zone (16) entourant la première zone (14).

2. Panneau frontal selon la revendication 1, **caractérisé en ce que** la première découpe de fenêtre (20) de la première couche (4) et la première zone (14) de la troisième couche (12) sont disposées de façon à coïncider.

3. Panneau frontal selon la revendication 1 ou 2, **caractérisé en ce que** la première découpe de fenêtre (20) de la première couche (4) a des dimensions minimalement supérieures à la première zone (14) de la troisième couche (12).

4. Panneau frontal selon l'une quelconque des revendications précédentes, **caractérisé en ce que** dans la première zone (14), la troisième couche (12) est munie d'une seconde découpe de fenêtre (22) qui permet une vue en transparence.

5. Panneau frontal selon l'une quelconque des revendications précédentes, **caractérisé en ce que** le panneau frontal (2), la première découpe de fenêtre (20) et la seconde découpe de fenêtre (22) ont respectivement la forme d'un rectangle.

6. Panneau frontal selon l'une quelconque des revendications précédentes, **caractérisé en ce que** la première couche (4) est en tôle métallique.

7. Panneau frontal selon l'une quelconque des revendications précédentes, **caractérisé en ce que** la première couche (4) est en tôle d'aluminium.

8. Panneau frontal selon l'une quelconque des revendications précédentes, **caractérisé en ce que** la seconde couche (6) est en verre.

9. Panneau frontal selon l'une quelconque des revendications précédentes, **caractérisé en ce que** la troisième couche (12) est en matière plastique.

10. Panneau frontal selon l'une quelconque des revendications précédentes, **caractérisé en ce que** la seconde zone (16) de la troisième couche (12) est munie d'une couleur de contraste par rapport à la première zone (14).

11. Panneau frontal selon l'une quelconque des revendications précédentes, **caractérisé en ce que** la seconde couche (4 ) est collée par sa première face (8) sur un verso de la première couche (4).

12. Panneau frontal selon l'une quelconque des revendications précédentes, **caractérisé en ce que** la seconde découpe de fenêtre (22) est adaptée pour offrir une vue en transparence sur des affichages optiques situés à l'arrière.

13. Panneau frontal selon l'une quelconque des revendications précédentes, **caractérisé en ce que** dans la première zone (14), la troisième couche (12) ressemble à la première couche (4) par sa couleur et / ou par sa structure de surface.

14. Appareil électroménager, notamment four avec un panneau frontal selon l'une quelconque des revendications précédentes.
